# EUROPÄISCHE PATENTSCHRIFT

(11) **EP 1 884 677 B1**
(45) Veröffentlichungstag und Bekanntmachung des Hinweises auf die Patenterteilung: **21.08.2013**
(21) Anmeldenummer: 07014262.5
(22) Anmeldetag: 20.07.2007
(51) Int. Cl.: F16D 25/08

(54) **Kupplungsvorrichtung, insbesondere Kraftfahrzeug-Kupplungsvorrichtung**
Clutch device, in particular motor vehicle clutch device
Dispositif d'embrayage, en particulier dispositif d'embrayage pour véhicule automobile

(30) Priorität: 02.08.2006 DE 102006036012
(43) Veröffentlichungstag der Anmeldung: 06.02.2008
(73) Patentinhaber: ZF Friedrichshafen AG, 88038 Friedrichshafen (DE)
(72) Erfinder: Peterseim, Michael, 97493 Bergrheinfeld (DE); Pagels, Olaf, 97493 Bergrheinfeld (DE); Feldhaus, Reinhard, 97502 Euerbach (DE); Rieß, Thomas, 97437 Haßfurt (DE); Ebert, Angelika, 97453 Schonungen (DE); Kister, Igor, 97076 Würzburg (DE); Müller, Thorsten, 88048 Friedrichshafen (DE)

(56) Entgegenhaltungen:
- WO-A1-00/26555
- WO-A1-2006/137288
- DE-A1- 19 957 271
- DE-A1-102004 059 811

## Beschreibung

Die Erfindung betrifft eine Kupplungsvorrichtung, insbesondere eine Kraftfahrzeug-Kupplungsvorrichtung, mit einer Kupplungsscheibe, die mittels eines Federmittels zwischen einem Schwungrad und einer Anpressplatte einspannbar ist, wobei die Kupplungsvorrichtung bei bestimmungsgemäßem Gebrauch an einem Motorgehäuse befestigt ist und wobei ein Betätigungsmittel vorhanden ist, mit dem ein auf die Anpressplatte wirkender Wirkabschnitt der Federmittel axial beweglich ist.

Kupplungsvorrichtungen dieser Art sind beispielsweise aus der DE 39 40 917 A1, aus der DE 42 08 906 B4 und aus der DE 195 32 509 A1 bekannt. Eine Kupplungsscheibe befindet sich hier zwischen einer Anpressplatte und einem Schwungrad, das drehfest mit dem Abtrieb einer Brennkraftmaschine verbunden ist. Die Anpressplatte wird dabei von einer Feder (Federmittel) und insbesondere von einem Wirkabschnitt derselben axial beaufschlagt, so dass ein Reibmoment über die Kupplungsvorrichtung übertragen werden kann. Zur axialen Bewegung der Feder bzw. deren Wirkabschnitt ist ein mechanisch oder hydraulisch arbeitender Aktuator (Betätigungsmittel) vorgesehen. Dieser kann an einer die Kupplungsvorrichtung abdeckenden Getriebeglocke drehfest angeordnet sein. Der Aktuator ist dabei mittels eines Lagers, beispielsweise eines Rillenkugellagers, rotatorisch zu einem Druckplattengehäuse gelagert, das die Druckplatte umgibt. Damit kann bei Rotation des Druckplattengehäuses der Aktuator ortsfest gehalten werden.

Diese Bauform hat den Vorteil, dass ein günstiger Kraftfluss bei der Beaufschlagung der Anpressplatte vorliegt. Der Kraftfluss ist im Kupplungsgehäuse geschlossen. Dadurch werden angrenzende Lager, beispielsweise für die Kurbelwelle oder das Zweimassenschwungrad, beim Betätigen des Aktuators nicht belastet.

Es hat sich herausgestellt, dass insbesondere im Falle dessen, dass hydraulische Bewegungsmittel zur axialen Bewegung des Wirkabschnitts der Feder eingesetzt werden, die Montage des Systems nicht immer problemfrei ist. Üblicherweise wird zunächst die Kupplung - bei der integrierten Ausführung auch die Betätigungseinheit - am Motor befestigt. Dann wird der Motor mit dem Getriebe verbunden. Die Kupplung und die Betätigungseinheit (Aktuator) befinden sich dann innerhalb der Getriebeglocke. Dadurch ist die Betätigungseinheit nicht mehr zugänglich, so dass die exakte Ausrichtung bzw. Positionierung derselben schwierig bzw. unmöglich sein kann.

Dies gilt insbesondere dann, wenn die Verdrehbarkeit der Betätigungseinheit relativ zur Getriebeglocke nicht unterbunden wird. Dann nämlich kann es infolge einer auch nur geringfügigen Relativdrehung zwischen Aktuator und Getriebeglocke dazu kommen, dass der Anschluss der Hydraulikleitung des Aktuators erschwert ist, da das Herausführen der Hydraulikleitung aus dem Inneren der Getriebeglocke zwecks Anschluss der Hydraulikleitung an ein Hydraulikölversorgungssystem nicht hinreichend reproduzierbar ist. Für die genaue Lage der Hydraulikleitung sind jedoch Vorgaben zu machen, da es funktionsbedingt nicht möglich ist, den Druckanschluss nach unten wegzuführen. Die Hydraulikleitung muss vielmehr, beginnend vom Hydraulikzylinder, stetig steigen, um die Entlüftung des Systems während des Betriebes zu gewährleisten. Aus der DE10 2004 059 811 ist eine Kupplungsvorrichtung mit den Merkmalen des Oberbegriffs von Anspruch 1 bekannt.

Der Erfindung liegt daher die **Aufgabe** zugrunde, eine Kupplungsvorrichtung der eingangs genannten Art so weiterzubilden, dass die genannten Nachteile vermieden werden. Insbesondere soll die Montage des Systems vereinfacht werden, wobei auf eine genaue Positionierung der einzelnen Komponenten relativ zueinander Wert gelegt wird.

Die **Lösung** dieser Aufgabe durch die Erfindung ist dadurch gekennzeichnet, dass das Betätigungsmittel zumindest mit einem seiner Bestandteile fest mit einem Abstützelement verbunden ist, das unmittelbar an dem Motorgehäuse befestigt ist., wobei die Kupplungsvorrichtung eine Getriebeglocke aufweist, die ein vom Abstützelement unterschiedliches Bauteil bildet.

Hierdurch wird es möglich, eine direkte Abstützung des Betätigungsmittels an dem Motorgehäuse zu erreichen, so dass insbesondere die Position des Betätigungsmittels in Umfangsrichtung klar und eindeutig sowie fest definiert ist.

Das Betätigungsmittel ist erfindungsgemäß als hydraulischer Aktuator ausgebildet. Die Erfindung sieht vor, dass das Betätigungsmittel einen axial beweglichen Ringkolben aufweist, der in einem ringförmigen Aufnahmeraum eines Zylinders angeordnet ist, wobei der Ringkolben und der Zylinder konzentrisch zur Achse der Kupplungsvorrichtung angeordnet sind. Das Betätigungsmittel weist dabei bevorzugt eine Hydraulikleitung auf, die den mit dem Abstützelement verbundenen Bestandteil des Betätigungsmittels bildet.

Nach einer ersten Ausführungsform der Erfindung kann das Abstützelement als bogenförmiger Halter ausgebildet sein.

Das Abstützelement ist dabei bevorzugt mit der Getriebeglocke verbunden.

Eine alternative Ausgestaltung der Erfindung sieht vor, dass das Abstützelement in einer Ausnehmung der Getriebeglocke angeordnet ist. In diesem Falle kann vorgesehen werden, dass zwischen dem sich in der Ausnehmung befindlichen Abstützelement und der Getriebeglocke eine Dichtung angeordnet ist.

In allen Fällen ist das Abstützelement vorzugsweise mit einer Schraubverbindung an dem Motorgehäuse befestigt.

Die Anpressplatte ist zumeist von einem Druckplattengehäuse umgeben. In diesem Falle kann zwischen dem Druckplattengehäuse und dem Betätigungsmittel ein Lager angeordnet sein. Dieses ist bevorzugt als Kugel- oder Wälzlager ausgebildet; besonders bevorzugt ist es ein Rillenkugellager.

In der Zeichnung sind Ausführungsbeispiele der Erfindung dargestellt. Es zeigen:
- Fig. 1: den Radialschnitt durch eine Kraftfahrzeug-Kupplungsvorrichtung gemäß einer ersten Ausführungsform der Erfindung,
- Fig. 2: eine alternative Ausführungsform der Erfindung in der Darstellung nach Fig. 1 und
- Fig. 3: einen Ausschnitt der Draufsicht auf die Kupplungsvorrichtung nach Fig. 2.

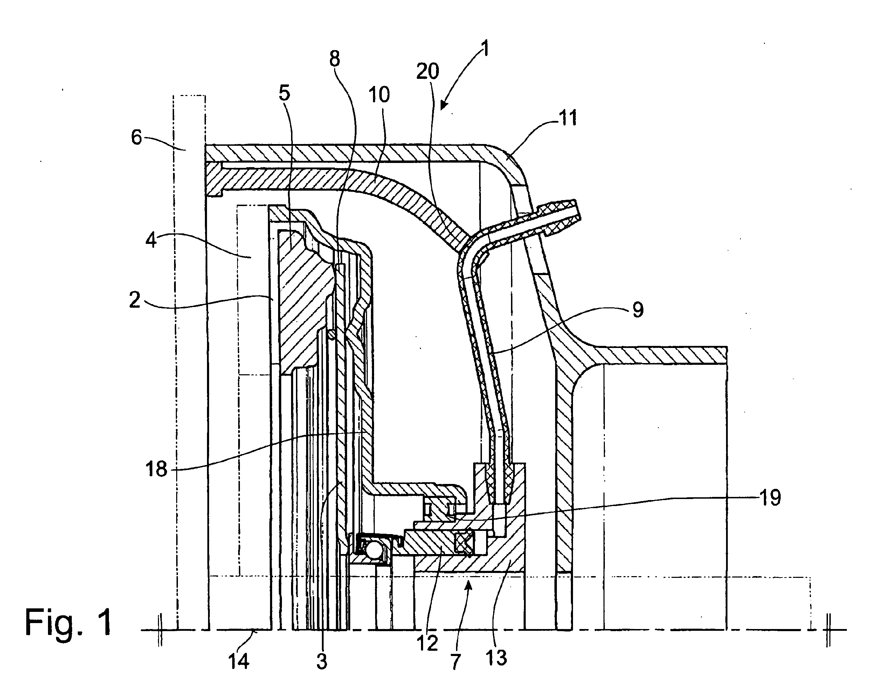

In Fig. 1 ist eine Kraftfahrzeug-Kupplungsvorrichtung 1 zu sehen, die zur Übertragung des Drehmoments von einem Verbrennungsmotor zu einem Getriebe dient. Die Kupplungsvorrichtung 1 ist als Reibungskupplung ausgeführt und hat eine Kupplungsscheibe 2, die zwischen einer Anpressplatte 5 und einem Schwungrad 4 angeordnet ist. Die Anpressplatte 5 kann von einem Federmittel 3 axial mit einer Kraft beaufschlagt werden, wodurch es zum Reibschluss zwischen Anpressplatte 5, Kupplungsscheibe 2 und Schwungrad 4 kommt. So wird ein Drehmoment vom Verbrennungsmotor zum Getriebe übertragen.

Hierzu wird das Federmittel 3, vorzugsweise als Tellerfeder ausgebildet, bzw. ein Wirkabschnitt 8 des Federmittels 3, das auf die Anpressplatte 5 drückt, von einem Kupplungsausrücksystem axial bewegt. Das Kupplungsausrücksystem besteht im wesentlichen aus einem Betätigungsmittel 7, das als hydraulischer Aktuator ausgeführt ist. Das Betätigungsmittel hat einen Zylinder 13, der koaxial um die Achse 14 der Kupplungsvorrichtung herum angeordnet ist. In einer ringraumartigen Ausnehmung im Zylinder 13 ist ein als Ringkolben 12 ausgebildeter Kolben angeordnet. Dabei wird zwischen dem Zylinder 13 und dem Kolben 12 ein Druckraum eingeschlossen, der über eine Hydraulikleitung 9 mit Druckfluid, vorzugsweise mit Hydrauliköl, beaufschlagt werden kann. Die Hydraulikleitung 9 wird von dem Betätigungsmittel 7 durch eine Getriebeglocke 11 hindurch nach außen geführt, wo eine Verbindung zu einer nicht dargestellten Hydraulikölquelle hergestellt wird.

Die Anpressplatte 5 ist zusammen mit der Kupplungsscheibe 2 von einem Druckplattengehäuse 18 umgeben, das um die Achse 14 rotieren kann und das am Schwungrad 4 festgelegt ist. Das Betätigungsmittel 7 ist indes ortsfest angeordnet. Die Relativ-Drehbewegung zwischen dem Betätigungsmittel 7 und dem Druckplattengehäuse 18 wird durch ein Lager 19 gewährleistet.

Um die Montage der Vorrichtung zu vereinfachen, ist erfindungsgemäß vorgesehen, dass das Betätigungsmittel 7 zumindest mit einem seiner Bestandteile - im vorliegenden Falle mit der Hydraulikleitung 9 - fest mit einem Abstützelement 10 verbunden ist, das unmittelbar an dem Motorgehäuse 6 befestigt ist, an dem die gesamte Kupplungsvorrichtung 1 befestigt wird.

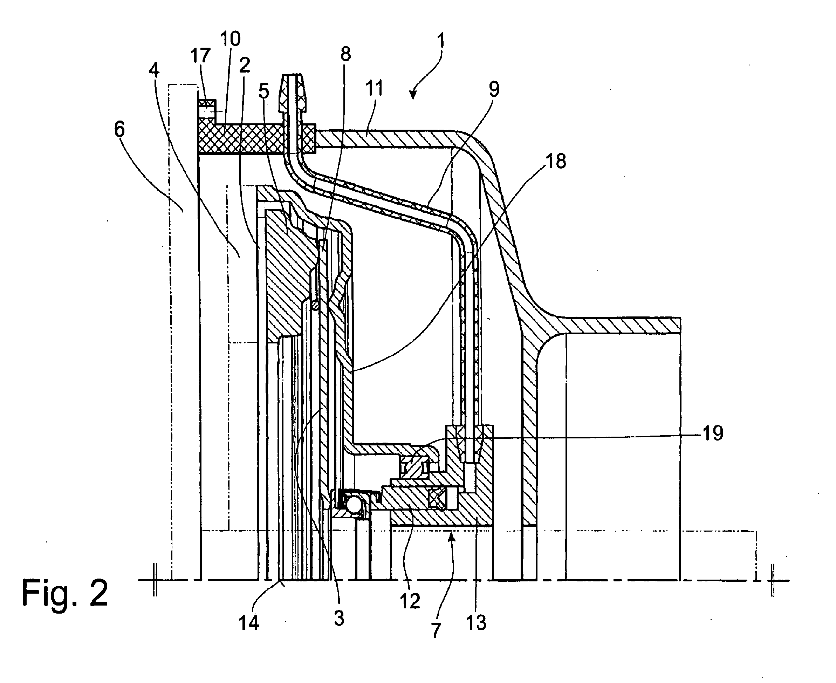

Wie es in Fig. 1 gesehen werden kann, ist das Abstützelement 10 als bogenförmiger Halter ausgeführt, der einen Halteabschnitt 20 für die Hydraulikleitung 9 aufweist, mit dem diese fest gehalten werden kann. Das Abstützelement 10 ist seinerseits fest mit dem Motorgehäuse 6 verbunden, insbesondere verschraubt (Schraubverbindung 17 in Fig. 2). Das Abstützelement 10 stellt also sicher, dass das Betätigungsmittel 7 drehfest am Motor abgestützt wird, so dass eine relative Verdrehung zwischen dem Betätigungsmittel 7 und dem Motorgehäuse 6 unterbunden wird. Bei der Montage, s. unten, wird ein Arbeitsschritt vorgesehen, bei dem das Betätigungsmittel 7 in die richtige Umfangsposition gebracht und in dieser gesichert wird.

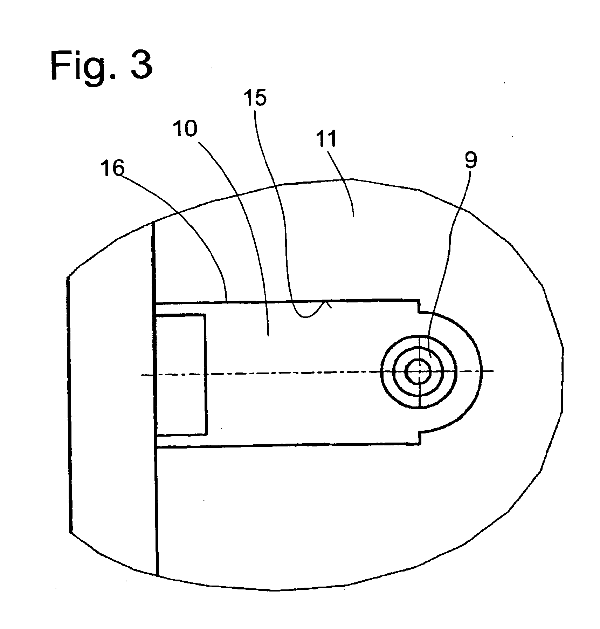

Während bei der Lösung gemäß Fig. 1 ein bügelförmiges Abstützelement 10 vorgesehen ist, zeigt die Ausgestaltung gemäß Fig. 2 ein plattenförmiges Abstützelement 10, das ebenfalls am Motorgehäuse 6 fixiert ist, vorliegend mit einer Schraubverbindung 17. Hier sitzt das Abstützelement 10 jedoch in einer Ausnehmung 15 (s. Fig. 3) in der Getriebeglocke 11. Zwischen dem Abstützelement 10 und der Getriebeglocke 11 ist eine nur schematisch angedeutete Dichtung 16 angeordnet, so dass die Dichtigkeit zwischen Abstützelement 10 und Getriebeglocke 11 sichergestellt ist. Möglich ist auch eine integrale Ausführung des Betätigungsmittels 10 mit der Getriebeglocke 11. Wesentlich ist lediglich, dass ein separates Abstützelement 10 vorgesehen wird.

Das Abstützelement 10 kann mit der Hydraulikleitung 9 einstückig ausgeführt sein.

In allen Fällen wird das Schleppmoment, das während des Betriebs der Vorrichtung von der Kupplung über das Lager 19 auf das Betätigungsmittel 7 übertragen wird, über die in gewissem Maße eigensteife Hydraulikleitung 9 und das Abstützelement 10 abgestützt.

Der Erfindungsvorschlag ermöglicht eine besonders einfache und reproduzierbare Montage der gesamten Vorrichtung. Insbesondere ist es ausgeschlossen, dass bei der Montage die Hydraulikleitung 9, die durch die Getriebeglocke 11 nach außen zu führen ist, in ihrer Position unbestimmt ist.

Dies wird sichergestellt, indem das Betätigungsmittel 7 direkt oder indirekt am Motorgehäuse 6 fixiert wird, und zwar nicht über die Getriebeglocke 11, sondern über das als separates Bauteil ausgebildete Abstützelement 10.

Bei der Montage kann so vorgegangen werden, dass zunächst das Betätigungsmittel 7 an der Kupplung montiert wird. Dann kann die Kupplung am Motor befestigt werden. Anschließend erfolgt die Positionierung bzw. Befestigung des Betätigungsmittels am Motor. Schließlich erfolgt die Montage des Getriebes am Motor.

Alternativ hierzu kann auch zunächst die Kupplung am Motor montiert werden. Dann wird das Betätigungsmittel an der Kupplung befestigt. Dann erfolgt die Positionierung bzw. Befestigung des Betätigungsmittels am Motor. Schließlich wird das Getriebe am Motor montiert.

Bei dem Betätigungsmittel 7 kann es sich um ein Kolben-Zylinder-System in gezogener oder gedrückter Bauart handeln.

Die vorgeschlagene Vorrichtung kann als Ausrücksystem oder als Einrücksystem ausgebildet sein. Bei den dargestellten Lösungen handelt es sich um ein hydraulisches Ausrücksystem, das als sogenannter CSC (konzentrischer Nehmerzylinder) ausgeführt ist.

### Bezugszeichenliste

- 1: Kupplungsvorrichtung
- 2: Kupplungsscheibe
- 3: Federmittel
- 4: Schwungrad
- 5: Anpressplatte
- 6: Motorgehäuse
- 7: Betätigungsmittel
- 8: Wirkabschnitt der Federmittel
- 9: Bestandteile des Betätigungsmittels (Hydraulikleitung)
- 10: Abstützelement
- 11: Getriebeglocke
- 12: Ringkolben
- 13: Zylinder
- 14: Achse
- 15: Ausnehmung
- 16: Dichtung
- 17: Schraubverbindung
- 18: Druckplattengehäuse
- 19: Lager
- 20: Halteabschnitt

## Patentansprüche

1. Kupplungsvorrichtung (1), insbesondere Kraftfahrzeug-Kupplungsvorrichtung, mit einer Kupplungsscheibe (2), die mittels eines Federmittels (3) zwischen einem Schwungrad (4) und einer Anpressplatte (5) einspannbar ist, wobei die Kupplungsvorrichtung (1) bei bestimmungsgemäßem Gebrauch an einem Motorgehäuse (6) befestigt ist und wobei ein Betätigungsmittel (7) vorhanden ist, mit dem ein auf die Anpressplatte (5) wirkender Wirkabschnitt (8) der Federmittel (3) axial beweglich ist, wobei das Betätigungsmittel (7) als hydraulischer Aktuator ausgebildet ist und einen axial beweglichen Ringkolben (12) aufweist, der in einem ringförmigen Aufnahmeraum eines Zylinders (13) angeordnet ist, wobei der Ringkolben (12) und der Zylinder (13) konzentrisch zur Achse (14) der Kupplungsvorrichtung (1) angeordnet sind,
**dadurch gekennzeichnet,**
**dass** das Betätigungsmittel (7) zumindest mit einem seiner Bestandteile (9) fest mit einem Abstützelement (10) verbunden ist, das unmittelbar an dem Motorgehäuse (6) befestifg bar ist, wobei die Kupplungsvorrichtung (1) weiterhin eine Getriebeglocke (11) aufweist, die ein vom Abstützelement (10) unterschiedliches Bauteil bildet.

2. Kupplungsvorrichtung nach Anspruch 1, **dadurch gekennzeichnet, dass** das Betätigungsmittel (7) eine Hydraulikleitung (9) aufweist, die den mit dem Abstützelement (10) verbundenen Bestandteil des Betätigungsmittels (7) bildet.

3. Kupplungsvorrichtung nach einem der Ansprüche 1 bis 2, **dadurch gekennzeichnet, dass** das Abstützelement (10) als bogenförmiger Halter ausgebildet ist.

4. Kupplungsvorrichtung nach einem der Ansprüche 1 bis 3, **dadurch gekennzeichnet, dass** das Abstützelement (10) mit der Getriebeglocke (11) verbunden ist.

5. Kupplungsvorrichtung nach Anspruch 4, **dadurch gekennzeichnet, dass** das Abstützelement (10) in einer Ausnehmung (15) der Getriebeglocke (11) angeordnet ist.

6. Kupplungsvorrichtung nach Anspruch 5, **dadurch gekennzeichnet, dass** zwischen dem sich in der Ausnehmung (15) befindlichen Abstützelement (10) und der Getriebeglocke (11) eine Dichtung (16) angeordnet ist.

7. Kupplungsvorrichtung nach einem der Ansprüche 1 bis 6, **dadurch gekennzeichnet, dass** das Abstützelement (10) mit einer Schraubverbindung (17) an dem Motorgehäuse (6) befestigt ist.

8. Kupplungsvorrichtung nach einem der Ansprüche 1 bis 7, **dadurch gekennzeichnet, dass** die Anpressplatte (5) von einem Druckplattengehäuse (18) umgeben ist.

9. Kupplungsvorrichtung nach Anspruch 8, **dadurch gekennzeichnet, dass** zwischen dem Druckplattengehäuse (18) und dem Betätigungsmittel (7) ein Lager (19) angeordnet ist.

10. Kupplungsvorrichtung nach Anspruch 9, **dadurch gekennzeichnet, dass** das Lager (19) als Kugel- oder Wälzlager ausgebildet ist.

11. Kupplungsvorrichtung nach Anspruch 10, **dadurch gekennzeichnet, dass** das Lager (19) ein Rillenkugellager ist.

## Claims

1. Clutch device (1), in particular motor-vehicle clutch device, having a clutch plate (2) which can be clamped by means of a spring means (3) between a flywheel (4) and a pressure plate (5), the clutch device (1) being fastened to an engine housing (6) in the case of use as intended, and there being an actuating means (7), by way of which an active section (8), acting on the pressure plate (5), of the spring means (3) can be moved axially, the actuating means (7) being configured as a hydraulic actuator and having an axially movable annular piston (12) which is arranged in an annular receiving space of a cylinder (13), the annular piston (12) and the cylinder (13) being arranged concentrically with respect to the axis (14) of the clutch device (1), **characterized in that** the actuating means (7) is connected fixedly at least by way of one of its constituent parts (9) to a supporting element (10) which can be fastened directly to the engine housing (6), the clutch device (1) having, furthermore, a transmission bell (11) which forms a component which is different from the supporting element (10).

2. Clutch device according to Claim 1, **characterized in that** the actuating means (7) has a hydraulic line (9) which forms that constituent part of the actuating means (7) which is connected to the supporting element (10).

3. Clutch device according to either of Claims 1 and 2, **characterized in that** the supporting element (10) is configured as an arcuate holder.

4. Clutch device according to one of Claims 1 to 3, **characterized in that** the supporting element (10) is connected to the transmission bell (11).

5. Clutch device according to Claim 4, **characterized in that** the supporting element (10) is arranged in a recess (15) of the transmission bell (11).

6. Clutch device according to Claim 5, **characterized in that** a seal (16) is arranged between the supporting element (10) which is situated in the recess (15) and the transmission bell (11).

7. Clutch device according to one of Claims 1 to 6, **characterized in that** the supporting element (10) is fastened to the engine housing (6) by way of a screw connection (17).

8. Clutch device according to one of Claims 1 to 7, **characterized in that** the pressure plate (5) is surrounded by a pressing-plate housing (18).

9. Clutch device according to Claim 8, **characterized in that** a bearing (19) is arranged between the pressing-plate housing (18) and the actuating means (7).

10. Clutch device according to Claim 9, **characterized in that** the bearing (19) is configured as a ball bearing or anti-friction bearing.

11. Clutch device according to Claim 10, **characterized in that** the bearing (19) is a deep-groove ball bearing.

## Revendications

1. Dispositif d'embrayage (1), en particulier dispositif d'embrayage pour véhicule automobile, comprenant un disque d'embrayage (2) qui peut être serré par le biais d'un moyen de ressort (3) entre un volant d'inertie (4) et un plateau de pressage (5), le dispositif d'embrayage (1), lors d'une utilisation conforme, étant fixé sur un carter moteur (6) et un moyen d'actionnement (7) étant prévu, avec lequel une portion fonctionnelle (8) du moyen de ressort (3) agissant sur le plateau de pressage (5) est déplaçable axialement, le moyen d'actionnement (7) étant réalisé sous forme d'actionneur hydraulique et présentant un piston annulaire (12) déplaçable axialement, qui est disposé dans un espace de réception annulaire d'un cylindre (13), le piston annulaire (12) et le cylindre (13) étant disposés concentriquement à l'axe (14) du dispositif d'embrayage (1),
**caractérisé en ce que**
le moyen d'actionnement (7) est connecté fixement à un élément d'appui (10) au moins par l'un de ses constituants (9), lequel élément d'appui peut être fixé directement au carter moteur (6), le dispositif d'embrayage (1) présentant en outre une cloche de transmission (11) qui forme un composant différent de l'élément d'appui (10).

2. Dispositif d'embrayage selon la revendication 1, **caractérisé en ce que** le moyen d'actionnement (7) présente une conduite hydraulique (9) qui forme le constituant du moyen d'actionnement (7) connecté à l'élément d'appui (10).

3. Dispositif d'embrayage selon l'une quelconque des revendications 1 à 2, **caractérisé en ce que** l'élément d'appui (10) est réalisé sous forme de support de forme arquée.

4. Dispositif d'embrayage selon l'une quelconque des revendications 1 à 3, **caractérisé en ce que** l'élément d'appui (10) est connecté à la cloche de transmission (11).

5. Dispositif d'embrayage selon la revendication 4, **caractérisé en ce que** l'élément d'appui (10) est disposé dans un évidement (15) de la cloche de transmission (11).

6. Dispositif d'embrayage selon la revendication 5, **caractérisé en ce qu'**entre l'élément d'appui (10) se trouvant dans l'évidement (15) et la cloche de transmission (11) est disposé un joint d'étanchéité (16).

7. Dispositif d'embrayage selon l'une quelconque des revendications 1 à 6, **caractérisé en ce que** l'élément d'appui (10) est fixé avec une connexion vissée (17) sur le carter moteur (6).

8. Dispositif d'embrayage selon l'une quelconque des revendications 1 à 7, **caractérisé en ce que** le plateau de pressage (5) est entouré par un boîtier de plateau de pression (18).

9. Dispositif d'embrayage selon la revendication 8, **caractérisé en ce qu'**entre le boîtier de plateau de pression (18) et le moyen d'actionnement (7) est disposé un palier (19).

10. Dispositif d'embrayage selon la revendication 9, **caractérisé en ce que** le palier (19) est réalisé sous forme de roulement à billes ou de palier à roulement.

11. Dispositif d'embrayage selon la revendication 10, **caractérisé en ce que** le palier (19) est un roulement rainuré à billes.
